# EUROPÄISCHE PATENTSCHRIFT

(11) **EP 3 279 688 B1**
(45) Veröffentlichungstag und Bekanntmachung des Hinweises auf die Patenterteilung: **17.03.2021**
(21) Anmeldenummer: 16465522.7
(22) Anmeldetag: 01.08.2016
(51) Int. Cl.: G01S 13/931, G01S 13/74

(54) **VERFAHREN ZUM BESTIMMEN DER POSITION EINER MOBILEN FUNKSTELLE DURCH EIN FAHRZEUG UND FAHRZEUG**
METHOD FOR MONITORING THE POSITION OF A MOBILE RADIO INTERFACE BY MEANS OF A VEHICLE AND VEHICLE
PROCEDE DE DETERMINATION DE LA POSITION D'UNE STATION MOBILE PAR UN VEHICULE ET VEHICULE

(43) Veröffentlichungstag der Anmeldung: 07.02.2018
(73) Patentinhaber: Continental Teves AG & Co. OHG, 60488 Frankfurt am Main (DE)
(72) Erfinder: Goron, Gabriel, 300003 Timisoara (RO); Schulmeister, Michael, 64846 Groß-Zimmern (DE); Rink, Klaus, 63517 Rodenbach (DE); Herzfeld, Jonas, 35390 Gießen (DE)
(74) Vertreter: Continental Corporation

(56) Entgegenhaltungen:
- DE-A1-102008 026 274
- DE-U1-202013 006 196
- US-A- 5 844 522
- US-A1- 2005 073 438
- US-A1- 2010 198 513
- US-A1- 2010 273 504
- US-A1- 2013 045 759
- US-A1- 2015 019 080

## Beschreibung

Die Erfindung betrifft ein Verfahren zum Vermeiden einer Kollision mit einem Verkehrsteilnehmer durch ein Fahrzeug.

Zur Vermeidung von Unfällen mit verletzlichen Verkehrsteilnehmern (VRU = Vulnerable Road User) ist es erstrebenswert, diese zu erkennen und präzise zu lokalisieren. Hierzu kommen grundsätzlich verschiedene Ansätze in Frage.

Beispielsweise kann mit einer rein fahrzeugseitigen Sensorik wie Radar, LIDAR oder Kamera eine Algorithmus-basierte Klassifizierung und Lokalisierung von Objekten wie Fußgängern oder anderen Verkehrsteilnehmern vorgenommen werden. Dies ist jedoch typischerweise auf den sichtbaren Bereich eingeschränkt. Verdeckte Objekte bzw. VRUs können typischerweise nicht lokalisiert werden. Gerade in urbanen Räumen ist jedoch die Anzahl an Situationen mit verdeckten VRUs recht hoch.

Eine weitere Möglichkeit besteht in der Verwendung von kooperativen Funksystemen mit einer Selbstlokalisierung des verletzlichen Verkehrsteilnehmers. Dabei wird typischerweise vorausgesetzt, dass sowohl der verletzliche Verkehrsteilnehmer als auch die Fahrzeuge im Straßenverkehr mit kompatiblen Sende- und Empfangseinheiten ausgestattet sind. Diese können dann über selbstlokalisierende oder fernlokalisierende Verfahren bzw. Transponder geortet werden.

Bei selbstlokalisierenden Verfahren bestimmt beispielsweise eine von einem verletzlichen Verkehrsteilnehmer getragene Einheit wie beispielsweise ein Mobiltelefon die eigene Position. Dies geschieht in der Praxis häufig per Satellitennavigationssystem (GNSS), funknetzbasierter Ortung (zum Beispiel über UMTS, LTE oder 5G), wie beispielsweise in den Druckschriften US20130045759, US2010273504 und US5844522, ggf. auch unter Zuhilfenahme eines Autos bzw. Flugzeugs, beschrieben, oder mittels einer anderen, lokalen, infrastrukturbasierten Ortungstechnik wie beispielsweise iBeacon. Die Position wird dann typischerweise mittels mobiler Datenverbindung auf einem zentralen Server abgelegt. Der Server sammelt ebenso Fahrzeugpositionen und kann dann Fahrzeuge und verletzliche Verkehrsteilnehmer warnen, sobald eine Kollisionsgefahr besteht. Derartige Lösungsansätze sind jedoch nach aktuellem Stand noch zu wenig ausgereift, um sie sinnvoll zur Vermeidung von Unfällen im Straßenverkehr einzusetzen.

Bei fernlokalisierenden Verfahren wird die Position eines Transponders eines verletzlichen Verkehrsteilnehmers typischerweise durch bidirektionale Kommunikation zwischen einem im Fahrzeug mitgeführten Transponder und einem vom Fußgänger mitgeführten Transponder bestimmt. Über die Laufzeit (RToF = Round-trip Time-of-Flight) und Richtung (AoA = Angle of Arrival) des am Fahrzeug empfangenen Funksignals kann die Position mit einer Genauigkeit von unter einem Meter bestimmt werden. Bestehende Systeme nutzen hierfür jedoch proprietäre Funkprotokolle, welche die Marktdurchdringung erschweren. Die im ISM-Band zur Verfügung stehende Bandbreite reicht außerdem typischerweise nicht aus, um reflektierte Signale (Multipath bzw. Mehrpfad) von dem direkten Signal in ausreichend hoher Auflösung zu unterscheiden. Insbesondere für die Richtungsinformation bzw. Winkelinformation gibt es im automobilen Bereich noch keine umsetzbare technische Lösung.

In der US 2005/073438 A1 ist diesbezüglich ein System und ein Verfahren zum Erzeugen von Fußgängerwarnungen beschreiben, wobei Fahrzeugführer Warnungen bezüglich möglicher Kollisionen zwischen Fahrzeug und Fußgänger und anderer Gefahren, die Fußgänger betreffen, erhalten. Zusätzlich können Fußgänger Warnungen bezüglich potentieller Gefahren, einschließlich Gefahren von Fahrzeug-Fußgänger-Kollisionen, erhalten. Mobile Geräte, die von Fußgängern getragen oder getragen werden können, reagieren auf Aktivierungssignale von einem Fahrzeuggerät. Die Fahrzeugvorrichtung empfängt Positionsinformation von jeder mobilen Vorrichtung innerhalb der Übertragungsreichweite und bestimmt relative Positionen von jeder der mobilen Vorrichtungen in Bezug auf die Position der Fahrzeugvorrichtung. Eine Bestimmung der Schnittwahrscheinlichkeit eines mobilen Geräts mit einer Warnzone in der Nähe der Fahrzeugvorrichtung wird gemäß vorher festgelegten Regeln berechnet und vorhergesagt. Wenn die Wahrscheinlichkeit der Überschneidung einen vorbestimmten Schwellenwert erreicht oder überschreitet, wird eine Warnung erzeugt.

Die DE 20 2013 006196 U1 betrifft ein Fahrerassistenzsystem für ein Kraftfahrzeug, welches ermittelt, ob eine mögliche Gefahrensituation in einem Bereich einer vor dem Kraftfahrzeug liegenden Umgebung basierend auf von durch eine Fahrzeug-zu-Fahrzeug-Kommunikationsvorrichtung oder Fahrzeug-zu-Infrastruktur-Kommunikationsvorrichtung des Kraftfahrzeugs empfangener Daten vorliegt und, falls ermittelt wird, dass eine mögliche Gefahrensituation in dem Bereich der vor dem Kraftfahrzeug liegenden Umgebung vorliegt, Herabsetzen eines Schwellenwerts einer Klassifikationsvorrichtung für ein Klassifizieren eines mittels eines Sensors zum Erfassen von Objekten im Bereich einer Umgebung des Kraftfahrzeugs erfassten Objekts als mögliches Kollisionsobjekt.

Die DE 10 2008 026274 41 A1 betrifft ein Verfahren zum Bestimmen einer Relativposition zwischen einem Egoobjekt und einem Zielobjekt, wobei durch das Egoobjekt eine autonome Relativposition des Zielobjektes, insbesondere mittels Radar oder Lidar, bestimmt wird, eine von dem Zielobjekt ausgesendete Information über die Position des Zielobjektes gesucht wird und, wenn die Information des Zielobjektes detektiert wird, wird eine kooperative Relativposition des Zielobjektes aus der Information bestimmt, und die Relativposition des Zielobjektes wird anschließend aus einer Fusion der autonomen Relativposition und der kooperativen Relativposition bestimmt. Wenn die Information des Zielobjektes nicht detektiert wird, erfolgt die Bestimmung der Relativposition nur aus der autonomen Relativposition.

Die US 2010/198513 A1 betrifft ein Fahrzeugerkennungssystem zum Überwachen entfernter Fahrzeuge in Bezug auf ein Egofahrzeug. Das Fahrzeugerkennungssystem umfasst dabei eine Objekterfassungsvorrichtung und eine Fahrzeug-zu-Fahrzeug Kommunikationsvorrichtung. Weiterhin ist ein Datenerfassungsmodul vorgesehen, um eine Sensorobjektdatenkarte und eine Fahrzeug-zu-Fahrzeug Objektdatenkarte zu ermitteln, wobei durch ein Fusionsmodul die Sensorobjektdatenkarte und die Fahrzeug-zu-Fahrzeug Objektdatenkarte zusammengeführt wird, um eine kumulative Objektdatenkarte zu erzeugen. Ein Verfolgungsmodul schätzt die relative Position der entfernten Fahrzeuge zum Egofahrzeug.

Es ist deshalb eine Aufgabe der Erfindung, ein Verfahren zum Vermeiden einer Kollision mit einem Verkehrsteilnehmer vorzusehen, welches im Vergleich zu aus dem Stand der Technik bekannten Verfahren alternativ, insbesondere besser, ausgeführt ist. Es ist des Weiteren eine Aufgabe der Erfindung, ein Fahrzeug vorzusehen, welches ein solches Verfahren ausführen kann.

Dies wird erfindungsgemäß durch ein Verfahren nach Anspruch 1 erreicht. Vorteilhafte Ausgestaltungen können den jeweiligen Unteransprüchen entnommen werden.

Die Erfindung betrifft ein Verfahren zum Vermeiden einer Kollision mit einem eine mobile Funkstelle aufweisenden Verkehrsteilnehmer durch ein Fahrzeug, welches folgende Schritte aufweist:
- Durchführen von mindestens drei Funkmessungen, wobei jede Funkmessung zwischen jeweils einer von mindestens drei separaten Funkstationen und der mobilen Funkstelle des Verkehrsteilnehmers entsprechend dem Vorgehen bei einer Trilateration erfolgt, und wobei bei den Funkmessungen ausschließlich jeweilige Abstände zwischen der jeweiligen Funkstation und der mobilen Funkstelle (4) gemessen werden, und wobei eine der Funkstationen das Fahrzeug ist, und wobei eine, einige oder alle der weiteren Funkstationen, welche nicht das Fahrzeug sind, ein jeweiliges weiteres Fahrzeug oder eine jeweilige Verkehrsinfrastruktureinrichtung sind,
- Berechnen der Position der mobilen Funkstelle basierend auf den mittels der Funkmessungen gemessenen Abstände, wobei die Funkstationen untereinander zur Durchführung des Verfahrens Daten austauschen, welche die gemessenen Abstände und die eigene Positionen betreffen,
- Bestimmen, ob eine Kollisionsgefahr zwischen dem Fahrzeug und dem die mobile Funkstelle aufweisenden Verkehrsteilnehmer besteht, und
- ansprechend auf eine erkannte Kollisionsgefahr Ausgeben einer Warnung oder Durchführen eines Kollisionsvermeidungsmanövers durch das Fahrzeug.

Mittels des erfindungsgemäßen Verfahrens ist es möglich, die Position einer mobilen Funkstelle in einem kooperativen Verfahren zu bestimmen. Es werden dabei das Fahrzeug als Funkstation, sowie als weitere Funkstationen ein oder mehrere Fahrzeuge und/oder auch feste Funkstationen in Form von Verkehrsinfrastruktureinrichtungen verwendet, so dass Abschattungseffekte weitestgehend vermieden werden. Außerdem wird die Lokalisierung dadurch verbessert, dass die mobile Funkstelle typischerweise von mehreren Seiten her und von unterschiedlichen Winkeln her gemessen werden kann, da mehrere Funkstationen bei der Durchführung des Verfahrens beteiligt sind.

Erfindungsgemäß sind eine, einige oder alle der Funkstationen, welche nicht das Fahrzeug sind, ein jeweiliges weiteres Fahrzeug oder es sind eine, einige oder alle der Funkstationen, welche nicht das Fahrzeug sind, eine jeweilige Verkehrsinfrastruktureinrichtung. Bei der Verkehrsinfrastruktureinrichtung kann es sich beispielsweise um eine Roadside Unit handeln. Es sei verstanden, dass diese Ausführungen ebenfalls in beliebiger Weise miteinander kombiniert werden können, d.h. das Verfahren kann beispielsweise unter Verwendung von drei, vier oder mehr Fahrzeugen als Funkstationen oder auch mittels dieser oder einer geringeren oder höheren Anzahl von Fahrzeugen und einer beliebigen Anzahl von ortsfesten Funkstationen gemeinsam durchgeführt werden. Alle solchen Kombinationen gelten als Bestandteil der Offenbarung dieser Anmeldung.

Weiterhin werden die zur Durchführung des Verfahrens notwendigen Daten ausgetauscht, welche die gemessenen Abstände und die eigenen Positionen betreffen, so dass ein Fahrzeug oder auch alle Fahrzeuge oder andere Funkstationen jeweils eine entsprechende Ortsbestimmung für die Funkstelle durchführen können. Auch die Funkstelle kann in diesen Datenaustausch grundsätzlich mit einbezogen werden. Der Datenaustausch kann beispielsweise mittels Fahrzeug-zu-X-Kommunikation, mittels eines Mobilfunknetzes oder mittels anderer Funkkommunikationstechniken erfolgen.

Damit kann in besonders bevorzugter Weise automatisch auf eine erkannte Kollisionsgefahr reagiert und eine Kollision vorteilhaft verhindert werden. Bei einem Kollisionsvermeidungsmanöver kann es sich beispielsweise um ein Bremsen oder um ein Ausweichen des Fahrzeugs handeln. Dies kann beispielsweise autonom bzw. automatisiert durchgeführt werden. Es kann jedoch auch eine entsprechende Warnung an den Fahrer ausgegeben werden, welche diesen zum Ausweichen oder Bremsen auffordert oder in anderer Weise auf die Kollisionsgefahr bzw. auf die mobile Funkstelle oder den zugeordneten verletzlichen Verkehrsteilnehmer hinweist.

Es sei verstanden, dass unter einer Funkstelle typischerweise eine Einheit verstanden wird, welche ein Verkehrsteilnehmer, insbesondere ein verletzlicher Verkehrsteilnehmer wie beispielsweise ein Fußgänger, ein Radfahrer oder ein Rollstuhlfahrer, bei sich trägt. Dabei kann es sich beispielsweise um ein Mobiltelefon, einen Transponder, einen Tag, ein Notebook, ein Tablet, einen mobilen Hotspot oder eine andere Einrichtung mit entsprechender Funktionalität handeln.

Unter einer Funkstation sei demgegenüber eine Station verstanden, welche nicht die Funkstelle selbst ist, jedoch an der Ermittlung der Position der Funkstelle durch entsprechende Funkmessungen beteiligt ist. Dabei handelt es sich insbesondere um das Fahrzeug, welches das Verfahren ausführt, selbst und des Weiteren auch um andere Fahrzeuge oder andere mobile oder stationäre Einheiten. Darauf wird weiter unten näher eingegangen werden.

Grundsätzlich kann eine jeweilige Funkstation sowohl zum Senden wie auch zum Empfangen eines Funksignals zur Durchführung einer jeweiligen Funkmessung verwendet werden.

Die Durchführung von zumindest drei Funkmessungen entspricht dem Vorgehen bei einer Trilateration wobei typischerweise auf Winkelmessungen verzichtet werden kann. Dabei werden bei den Funkmessungen ausschließlich jeweilige Abstände zwischen der jeweiligen Funkstation und der mobilen Funkstelle gemessen werden. Dies kann insbesondere mittels Laufzeitmessung durchgeführt werden. Auf die Ermittlung von Winkeln kann dabei vorteilhaft verzichtet werden, so dass auf eine Verbauung entsprechender Antennen bzw. Sensorik, welche Winkel messen können, verzichtet werden kann. Dies kann Sensoren einsparen. Gemäß einer Ausführung werden die jeweiligen Abstände zwischen der jeweiligen Funkstation und der mobilen Funkstelle mittels Laufzeitmessung gemessen. Typischerweise ergibt sich die Position einer Funkstelle aus drei Abständen. Auch eine Überbestimmung ist jedoch grundsätzlich möglich, so dass vorherige Ergebnisse plausibilisiert werden können oder die Genauigkeit und die Zuverlässigkeit verbessert werden können. Alle Funkstationen sind separat voneinander ausgebildet. Dadurch können die Funkstationen insbesondere die Funkstelle von unterschiedlichen Winkeln aus vermessen werden.

Bevorzugt bestimmt jede der Funkstationen ihre jeweilige Position mittels Satellitennavigation oder mittels terrestrischen Funknetzen. Dies ist insbesondere bei mobilen Funkstationen vorteilhaft, da die jeweilige Position typischerweise in die Berechnung einer Position der mobilen Funkstelle eingeht. Es kann auch vorgesehen sein, dass eine jeweilige Funkstation ihre jeweilige Position kennt. Dies kann insbesondere bei ortsfesten Funkstationen der Fall sein. Dabei kann die Position beispielsweise fest eingespeichert sein.

Gemäß einer Weiterbildung werden von einer, einigen oder allen der mindestens drei Funkstationen zusätzlich Messungen mittels jeweiliger Umfeldsensoren, insbesondere Kamera und/oder Radar und/oder Laser, durchgeführt. Die Messungen der Umfeldsensoren können beim Berechnen der Position verwendet werden. Damit kann eine zusätzliche Plausibilisierung oder eine Verbesserung der Genauigkeit bei der Erkennung erreicht werden.

Die Erfindung betrifft des Weiteren ein nichtflüchtiges computerlesbares Speichermedium, welches Programmcode enthält, bei dessen Ausführung ein Prozessor ein erfindungsgemäßes Verfahren ausführt. Hinsichtlich des erfindungsgemäßen Verfahrens kann auf alle beschriebenen Ausführungen und Varianten zurückgegriffen werden.

Mittels des erfindungsgemäßen Verfahrens können insbesondere auch verdeckte, von derzeitigen Umfeldsensor-basierten Schutzsystemen nicht erkennbare verletzliche Verkehrsteilnehmer erkannt werden.

Allgemein kann gesagt werden, dass man darauf abzielen kann, Fahrzeuge mit kooperativen Sensoren auszustatten, welche relativ zu einem verletzlichen Verkehrsteilnehmer bzw. VRU mit einer Empfangseinheit einen Abstand bestimmen können. Die Problematik einer ausreichend genauen Positionsbestimmung wird
nun folgendermaßen gelöst. Es wird vorgeschlagen, dass die mit kooperativer Sensorik ausgestatteten Fahrzeuge sich gegenseitig dabei unterstützen, einzelne verletzliche Verkehrsteilnehmer zu lokalisieren. Fahrzeuge, querende Fahrzeuge, entgegenkommende Fahrzeuge usw. können dabei alle die Abstände zu den einzelnen verletzlichen Verkehrsteilnehmern bestimmen und untereinander austauschen. Aus den Schnittpunkten können dann die absoluten Positionen ermittelt werden. Dadurch kann das Fahrzeug bestimmt werden, für welches der/die verletzliche Verkehrsteilnehmer relevant ist/sind und welches entsprechend eine Schutzhandlung ausführen soll. Bei der Schutzhandlung kann es sich um ein Kollisionsvermeidungsmanöver handeln. Besonders vorteilhaft wäre es dabei auch, kooperative Sensoren, welche an Infrastruktureinheiten angebracht sind (zum Beispiel Ampeln, Straßenlaternen usw.), mit einzubinden, da deren Eigenposition, welche in die Abstandsmessung mit eingeht, eine bekannte, vermessene Position ist, wohingegen die Fahrzeuge ihre Position typischerweise selbst bestimmen, was fehlerbehaftet ist, jedoch in die Abstandsmessung zum verletzlichen Verkehrsteilnehmer eingeht.

Nachfolgend werden einige vorteilhafte Eigenschaften dieses Ansatzes aufgezählt.

Der verletzliche Verkehrsteilnehmer wird aus verschiedenen Richtungen beobachtet. Damit sinkt die Problematik, dass dieser gegebenenfalls verdeckt ist und die Funklokalisierung nur eingeschränkt funktioniert. Dies gilt für Verdeckungen durch andere Objekte wie Fahrzeuge, Bäume, Häuser und Ähnliches wie auch durch die Verdeckung durch den Körper des verletzlichen Verkehrsteilnehmers selbst, was beispielsweise eine Dämpfung des Funksignals bei der Lokalisierung bewirken kann.

Weiterhin kann durch diesen Ansatz die Häufigkeit von Ungenauigkeiten durch Mehrpfad- bzw. Multipfad-Effekte reduziert werden, da die Wahrscheinlichkeit für eine Sichtverbindung bzw. Line of Sight steigt.

Mit der gesteigerten Line-of-Sight-Wahrscheinlichkeit können auch bei moderaten Abständen Umfeldsensoren wie Kamera und Radar zur unterstützenden Lokalisierung genutzt werden.

Durch die verteilte Betrachtung aus mehreren Richtungen können auch mehrere verletzliche Verkehrsteilnehmer erkannt werden.

Weiterhin wird durch die verteilte Betrachtung aus mehreren Richtungen eine präzise Lokalisierung ermöglicht, da man dem für die Positionsbestimmung besonders vorteilhaften Schnittwinkel von 90° statistisch viel öfter nahekommt.

Bei Ausführungen ohne Winkelmessung ist vorteilhaft kein weiteres Antennen-Array zur Winkelmessung mittels Angle of Arrival (AoA) notwendig. Zur Abstandsmessung kann beispielsweise nur eine Funktechnologie verwendet werden. Es sei jedoch verstanden, dass mehrere Funktechnologien zur Abstandsmessung verwendet werden können.

Das beschriebene Verfahren ist in ähnlicher bzw. gleicher Weise auch für eine Fahrzeug-zu-Fahrzeug-Lokalisierung verwendbar. Dies kann beispielsweise bedeuten, dass die bereits erwähnte Funkstelle bzw. mobile Funkstelle nicht einem typischen verletzlichen Verkehrsteilnehmer wie beispielsweise einem Fußgänger, sondern einem Fahrzeug wie beispielsweise einem Kraftfahrzeug zugeordnet ist.

Es sei des Weiteren verstanden, dass als Funksignale auch die von einem Mobiltelefon normalerweise zur Kommunikation mit Basisstationen eines Mobilfunknetzes verwendeten Funksignale verwendet werden können. Dies kann die Installation zusätzlicher Anwendungen bzw. das Aussenden zusätzlicher Funksignale vermeiden helfen.

Weitere Merkmale und Vorteile wird der Fachmann dem nachfolgend mit Bezug auf die beigefügte Zeichnung beschriebenen Ausführungsbeispiel entnehmen. Dabei zeigt:

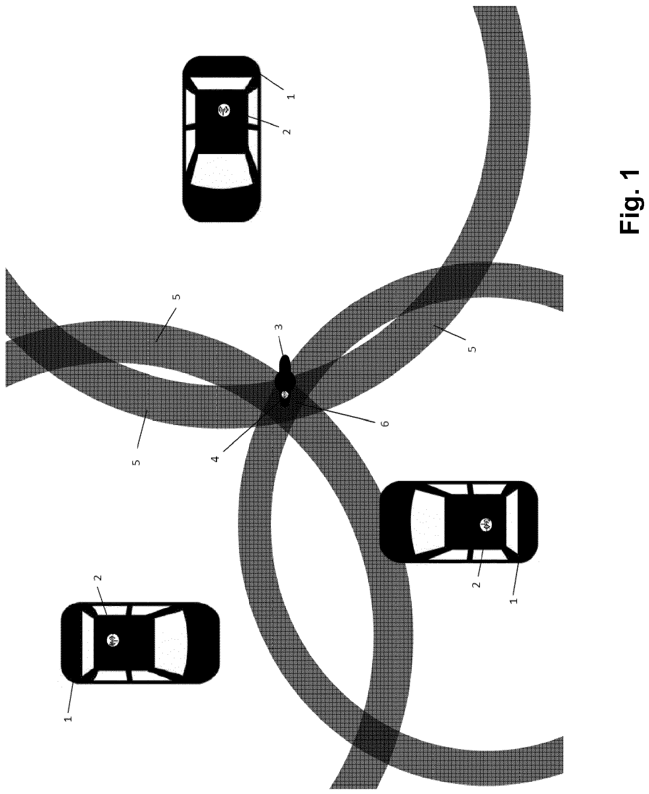

- Fig. 1:: eine Anordnung zur Durchführung eines Ausführungsbeispiels des erfindungsgemäßen Verfahrens.

Fig. 1 zeigt eine Anordnung aus drei Fahrzeugen zur Durchführung einer möglichen Ausführung des erfindungsgemäßen Verfahrens.

Die Fahrzeuge sind dabei jeweils mit dem Bezugszeichen 1 bezeichnet. Das Fahrzeug, welches unten links gezeigt ist, ist dabei dasjenige, welches das erfindungsgemäße Verfahren zusammen mit den beiden anderen Fahrzeugen durchführt. Die Fahrzeuge 1 können dabei jeweils als Funkstationen aufgefasst werden.

Die beiden links im Bild gezeigten Fahrzeuge fahren wie gezeigt in entgegengesetzte Richtungen. Das im Bild rechts gezeigte Fahrzeug fährt in einer orthogonalen Richtung dazu nach links.

Zwischen den drei Fahrzeugen 1 befindet sich ein verletzlicher Verkehrsteilnehmer 3 in Form eines Fußgängers. Dieser führt eine mobile Funkstelle 4 in Form eines Mobiltelefons mit sich. Die mobile Funkstelle 4 ist dazu ausgebildet, bei der Durchführung des erfindungsgemäßen Verfahrens mitzuwirken.

Jedes Fahrzeug 1 weist eine jeweilige Funkkommunikationseinheit 2 auf, welche an der Durchführung des erfindungsgemäßen Verfahrens mitwirkt. Insbesondere können die Funkkommunikationseinheiten 2 untereinander kommunizieren und sie können auch mit der mobilen Funkstelle 4 kommunizieren. Zu letzterer können sie insbesondere durch Laufzeitmessung ihren jeweiligen Abstand bestimmen.

Aus dieser Abstandsmessung ergeben sich die drei in Fig. 1 gezeigten und mit Bezugszeichen 5 eingezeichneten kreisförmigen Flächen. Sie basieren jeweils auf einer Abstandsmessung zu einem der Fahrzeuge 1. Es ist davon auszugehen, dass sich der verletzliche Verkehrsteilnehmer 3 bzw. dessen mobile Funkstelle 4 in einer Schnittfläche dieser drei mit Bezugszeichen 5 bezeichneten Flächen befindet. Diese Schnittfläche ist mit dem Bezugszeichen 6 bezeichnet.

Durch kooperatives Bestimmen der Position des verletzlichen Verkehrsteilnehmers 3 kann somit dessen Position von den drei Fahrzeugen 1 sehr genau und vorliegend ohne das Erfordernis einer Eigenlokalisierung durch den verletzlichen Verkehrsteilnehmer 3 bestimmt werden. Vorliegend kann beispielsweise aus der ermittelten Position des verletzlichen Verkehrsteilnehmers 3 geschlossen werden, dass die beiden links im Bild eingezeichneten Fahrzeuge 1 problemlos weiterfahren können, wohingegen bei dem rechts im Bild eingezeichneten, nach links fahrenden Fahrzeug 1 ein Ausweichmanöver angezeigt ist, um den verletzlichen Verkehrsteilnehmer 3 nicht zu gefährden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung über ein Mobilfunknetz explizit nicht aus.

## Patentansprüche

1. Verfahren zum Vermeiden einer Kollision mit einem eine mobile Funkstelle (4) aufweisenden Verkehrsteilnehmer durch ein Fahrzeug (1), **dadurch gekennzeichnet, dass** das Verfahren folgende Schritte aufweist:
- Durchführen von mindestens drei Funkmessungen, wobei jede Funkmessung zwischen jeweils einer von mindestens drei separaten Funkstationen und der mobilen Funkstelle (4) des Verkehrsteilnehmers entsprechend dem Vorgehen bei einer Trilateration erfolgt, und wobei bei den Funkmessungen ausschließlich jeweilige Abstände zwischen der jeweiligen Funkstation und der mobilen Funkstelle (4) gemessen werden, und wobei eine der Funkstationen das Fahrzeug (1) ist, und wobei eine, einige oder alle der weiteren Funkstationen, welche nicht das Fahrzeug (1) sind, ein jeweiliges weiteres Fahrzeug (1) oder eine jeweilige Verkehrsinfrastruktureinrichtung sind,
- Berechnen der Position der mobilen Funkstelle (4) basierend auf den mittels der Funkmessungen gemessenen Abstände, wobei die Funkstationen untereinander zur Durchführung des Verfahrens Daten austauschen, welche die gemessenen Abstände und die eigenen Positionen betreffen,
- Bestimmen, ob eine Kollisionsgefahr zwischen dem Fahrzeug (1) und dem die mobile Funkstelle (4) aufweisenden Verkehrsteilnehmer besteht, und
- ansprechend auf eine erkannte Kollisionsgefahr Ausgeben einer Warnung oder Durchführen eines Kollisionsvermeidungsmanövers durch das Fahrzeug (1).

2. Verfahren nach Anspruch 1,
- wobei die jeweiligen Abstände zwischen der jeweiligen Funkstation und der mobilen Funkstelle (4) mittels Laufzeitmessung gemessen werden.

3. Verfahren nach einem der vorhergehenden Ansprüche,
- wobei jede der Funkstationen ihre jeweilige Position mittels Satellitennavigation oder mittels terrestrischen Funknetzen bestimmt oder ihre jeweilige Position kennt.

4. Verfahren nach einem der vorhergehenden Ansprüche,
- wobei von einer, einigen oder allen der mindestens drei Funkstationen zusätzlich Messungen mittels jeweiliger Umfeldsensoren, insbesondere Kamera und/oder Radar und/oder Laser, durchgeführt werden, und
- wobei die Messungen der Umfeldsensoren beim Berechnen der Position verwendet werden.

## Claims

1. Method for avoiding a collision between a vehicle (1) and a road user having a mobile radio interface (4), **characterized in that** the method comprises the following steps:
- carrying out at least three radio measurements, wherein each radio measurement takes place between in each case one of at least three separate radio stations and the mobile radio interface (4) of the road user, and wherein in the radio measurements exclusively respective distances between the respective radio station and the mobile radio interface (4) are measured, and wherein one of the radio stations is the vehicle (1), and wherein one or some or all of the other radio stations which are not the vehicle (1) is/are a respective further vehicle (1) or a respective road infrastructure device,
- calculating the position of the mobile radio interface (4) on the basis of the distances measured by means of the radio measurements, wherein the radio stations exchange data with one another in order to carry out the method, which data relates to the measured distances and the station's own positions,
- determining whether there is a risk of a collision between the vehicle (1) and the road user having the mobile radio interface (4), and
- outputting, in response to a detected risk of collision, a warning message or carrying out a collision avoidance manoeuvre by means of the vehicle (1).

2. Method according to Claim 1,
- wherein the respective distances between the respective radio station and the mobile radio interface (4) are measured by means of transit time measurement.

3. Method according to one of the preceding claims,
- wherein each of the radio stations determines its respective position by means of satellite navigation or by means of terrestrial radio networks or knows its respective position.

4. Method according to one of the preceding claims,
- wherein measurements are additionally carried out by one, some or all of the at least three radio stations by means of respective surroundings sensors, in particular a camera and/or radar and/or laser system, and
- wherein the measurements of the surroundings sensors are used when calculating the position.

## Revendications

1. Procédé permettant d'éviter une collision entre un usager de la route, comportant une station radio mobile (4), et un véhicule (1), **caractérisé en ce que** le procédé comprend les étapes suivantes :
- effectuer au moins trois mesures radio, chaque mesure radio étant effectuée entre l'une d'au moins trois stations radio séparées et la station radio mobile (4) de l'usager de la route, et seules les distances respectives entre la station radio respective et la station radio mobile (4) étant mesurées lors des mesures radio, et l'une des stations radio étant le véhicule (1), et une station radio, certaines stations radio ou toutes les autres stations radio, qui ne sont pas celles du véhicule (1), étant celles d'un autre véhicule respectif (1) ou d'un dispositif d'infrastructure routière respective,
- calculer la position de la station radio mobile (4) sur la base des distances mesurées à l'aide des mesures radio, les stations radio échangeant entre elles des données relatives aux distances mesurées et à leurs propres positions pour mettre en œuvre le procédé,
- déterminer s'il existe un risque de collision entre le véhicule (1) et l'usager de la route comportant la station radio mobile (4), et
- en réponse à un risque de collision avéré, faire en sorte que le véhicule (1) délivre un avertissement ou effectue une manœuvre d'évitement de collision.

2. Procédé selon la revendication 1,
- les distances respectives entre la station radio respective et la station radio mobile (4) étant mesurées à l'aide d'une mesure de temps de propagation.

3. Procédé selon l'une des revendications précédentes,
- chacune des stations radio déterminant sa position respective à l'aide de la navigation par satellite ou à l'aide de réseaux radio terrestres ou détectant sa position respective.

4. Procédé selon l'une des revendications précédentes,
- des mesures étant en plus effectuées par l'une, une partie ou la totalité des au moins trois stations radio à l'aide de capteurs d'environnement respectifs, en particulier d'une caméra et/ou d'un radar et/ou d'un laser, et
- les mesures des capteurs d'environnement étant utilisées lors du calcul de la position.
